# EUROPÄISCHE PATENTSCHRIFT

(11) **EP 2 775 203 B1**
(45) Veröffentlichungstag und Bekanntmachung des Hinweises auf die Patenterteilung: **28.06.2017**
(21) Anmeldenummer: 14157701.5
(22) Anmeldetag: 04.03.2014
(51) Int. Cl.: F23D 1/04

(54) **Mehrstoffbrenner und Verfahren zum Beheizen eines Ofenraums**
Multi-fuel burner and method for heating an oven
Brûleur multi-combustibles et procédé de chauffage d'un four

(30) Priorität: 08.03.2013 DE 102013004016
(43) Veröffentlichungstag der Anmeldung: 10.09.2014
(73) Patentinhaber: Messer Austria GmbH, 2352 Gumpoldskirchen (AT)
(72) Erfinder: Demuth, Martin, 2352 Gumpoldskirchen (AT)
(74) Vertreter: Münzel, Joachim R.

(56) Entgegenhaltungen:
- WO-A1-2008/065554
- DE-A1- 2 905 746
- DE-A1-102006 060 867

## Beschreibung

Die Erfindung betrifft einen Mehrstoffbrenner, bei dem eine Zuführung für einen primären Brennstoff und eine Zuführung für ein primäres Oxidationsmittel sowie wenigstens eine Zuführung für wenigstens einen zweiten Brennstoff an einer Brennerstirn in einen Ofenraum ausmündet. Die Erfindung betrifft des Weiteren ein Verfahren zum Betreiben eines Mehrstoffbrenners.

Derartige Mehrstoffbrenner kommen insbesondere in Drehrohröfen, beispielsweise in Drehrohröfen zur Zementherstellung oder zur thermischen Abfallverwertung zum Einsatz, und ermöglichen insbesondere die Verwendung von Brennstoffen unterschiedlichen Heizwerts bei der Verbrennung.

Unter dem Begriff "niederkalorische Brennstoffe" werden Brennstoffe verstanden, die einen geringeren Heizwert als Erdgas besitzen. Beispiele für niederkalorische Brennstoffe sind gasförmige Brennstoffe mit einem Heizwert von weniger als 10 kWh/m³, wie beispielsweise Biogas, Stadtgas oder Grubengas, oder feste oder flüssige Brennstoffe mit einem Heizwert unter 30 MJ/kg. Unter dem Begriff "Ersatzbrennstoff" sollen hier sämtliche nicht-fossilen Brennstoffe, insbesondere aus Abfall gewonnene Brennstoffe, verstanden werden. Die Spanne der eingesetzten Ersatzbrennstoffe reicht von Lösemitteln, Reifen- und Altholzschnitzel, Klärschlamm, Spuckstoffen, Schreddermaterial aus der Kunststoffverarbeitung oder Tiermehl bis hin zur aufbereitetem Abfall aus Haushalten, Industrie- und Gewerbebetrieben, sowie nachwachsende Rohstoffe. Als erster oder primärer Brennstoff kommt meist ein hochkalorischer Brennstoff (mit einem Heizwert von mehr als 10 kWh/m³ bzw. 30 MJ/kg) oder ein Gemisch aus einem hochkalorischen Brennstoff wie Kohle, Öl oder Erdgas mit einem Ersatzbrennstoff zum Einsatz.

Mehrstoffbrenner umfassen in der Regel mehrere Zuführungen für ein primäres Oxidationsmittel, einen ersten (oder "primären") Brennstoff sowie Zuführungen für mindestens einen weiteren Brennstoff ("sekundäre Brennstoffe"), insbesondere für Ersatzbrennstoffe. Die Zuführungen sind dabei als Ringdüsen ausgebildet und/oder erstrecken sich in Form von parallel zueinander angeordneten Rohren durch den Brennerkopf hindurch. Als primäres Oxidationsmittel kommt in der Regel Luft ("Primärluft") zum Einsatz. Ein sekundäres Oxidationsmittel ("Sekundärluft") wird über separate Zuführungen außerhalb des Brenners unmittelbar in den Ofenraum eingegeben. Um im Falle des Einsatzes eines Gemisches aus einem hochkalorischen Brennstoff mit einem Ersatzbrennstoff als Primärbrennstoff ein mit dem Einsatz eines reinen hochkalorischen Brennstoffs vergleichbares Temperaturprofil zu erzielen, können die Brenner mit verstellbaren Düsen bzw. Kanälen und hohen Primärluftimpulsen ausgerüstet werden. Durch eine Verdrallung der Primärluft werden zudem eine frühzeitige Vermischung der heißen Sekundärluft mit dem primären Brennstoff und eine gezielte Einstellung der Flammenform ermöglicht.

Ein Mehrstoffbrenner dieser Art wird beispielsweise in der DE 10 2010 061 496 A1 beschrieben. Er umfasst einen ringförmigen Zuführungskanal für einen primären Brennstoff, einen oder mehrere im Zentrumsbereich des Brennermundes parallel zueinander angeordnete rohrförmige Zuführungen für sekundären Brennstoff und mehrere, konzentrisch zum Zuführungskanal für den primären Brennstoff in gleichmäßigen Winkelabständen angeordnete Zuführungen für das primäre Oxidationsmittel.

In der DE 196 48 981 A1 wird eine Brenneranordnung beschrieben, bei der über kreisringförmig angeordnete Kanäle bzw. Düsen im Außenbereich des Brennermundes hohe Primärluftmengen (5 bis 15% der für eine stöchiometrische Verbrennung notwendigen Luftmenge) mit hohen Austrittgeschwindigkeiten und damit hohen Impulsströmen aufgegeben werden. Dieser Impulsstrom bewirkt nach dem Injektorprinzip die Ansaugung der heißen Sekundärluft. Feingemahlene Kohle wird bei diesen Brennern ebenfalls ringförmig nahe an der Primärluftzuführung aufgegeben, um eine frühe Vermischung mit der Sekundärluft zu ermöglichen.

Beim Gegenstand der DE 199 25 875 A1 wird als primärer Brennstoff feingemahlene Kohle über einen ringförmigen Kanal zugeführt, welcher einen Ring aus Düsen für das primäre Oxidationsmittel umschließt. Weitere primäre Brennstoffe wie Öl, Erdgas oder feingemahlene Festbrennstoffe werden über zusätzliche, meist ringförmige oder ringförmig angeordnete Kanäle im Zentrum der Brennerstirn zugeführt. Als sekundäre Brennstoffe werden stückige Ersatzbrennstoffe über zusätzliche Satellitenbrenner im Ofenkopf oder über Rohre aufgegeben, deren Austrittsöffnungen im Zentrum der Brennerstirn oder am bzw. auf dem Brennermantel angeordnet sind.

Aufgrund betriebswirtschaftlicher Erwägungen geht der Trend in der Zementindustrie zu einem immer stärkeren Einsatz von niederkalorischen Brennstoffen bzw. Ersatzbrennstoffen. Ein erhöhter Anteil von Ersatzbrennstoffen im Primärbrennstoff, insbesondere bei Einsatz von Festbrennstoffen, führt jedoch zu Problemen mit dem Ofenbetrieb und der Klinkerqualität. Da Ersatzbrennstoffe, wie beispielsweise geschredderte Kunststoffe, aus technischen und betriebswirtschaftlichen Gründen nur bis Korngrößen von ca. 10 bis 20 mm Durchmesser aufbereitet werden, besitzen sie ein deutlich schlechteres Flug- und Ausbrandverhalten als beispielsweise eine fein gemahlene Kohle. Gleichzeitig beinhalten diese Materialien unterschiedlichste Inhaltsstoffe und Feuchtegehalte, und die Korngrößenverteilung erstreckt sich über ein weites Kornband. Dies führt dazu, dass insbesondere große, schwere und unregelmäßig geformte Partikel vor ihrer vollständigen Umsetzung auf das Klinkerbett fallen und dort chemische Reaktionen mit dem Aufgabestoff auslösen. Insbesondere kommt es im Klinkerbett zu einer Reduktion von Fe₂O₃ zu FeO, die wiederum in der Verfärbung des Klinkers und in einer verminderten Klinkerqualität resultiert. Das schlechte Ausbrandverhalten verschiebt auch die Temperaturverteilung der Flamme vom Brennermund weg und verringert die damit erreichbaren Spitzentemperaturen, welche zum Brennen des Materials notwendig sind.

Es existieren diverse Ansätze, die Flugphase und den Umsatz des Ersatzbrennstoffs zu verbessern. Beispielsweise stellen Belüftung und Verdrallung des Brennstoffs vor dem Austritt aus dem eigentlichen Brennstoffkanal Ansätze dar, um die Flugeigenschaften des Brennstoffs zu verbessern. Die Erhöhung der Transportluftmenge für den Ersatzbrennstoff bewirkt ebenfalls eine längere Flugphase des gesamten Brennstoffs, sorgt jedoch gleichzeitig dafür, dass der Brennstoff zu schnell aus dem heißen Brennernahbereich getragen wird. Zudem bewirken hohe Geschwindigkeiten in den Ersatzbrennstoffkanälen einen erhöhten Verschleiß und einen unerwünschten Kühleffekt, da die Transportluft üblicherweise Umgebungstemperatur besitzt.

In der AT 411 928 B wird eine Brenneranordnung beschrieben, die einen ringförmigen Kanal für Primärluft und einen radial innenseitig von diesem, jedoch exzentrisch angeordneten Kanal für einen höher reaktiven primären Brennstoff umfasst. Zwischen den Zuführungskanälen von Primärbrennstoff und Verbrennungsluft ist eine sichelförmige Zuführung für weniger reaktiven Sekundärbrennstoff vorgesehen. Mit dieser Anordnung wird der weniger reaktive Brennstoff direkt der Verbrennungsluft ausgesetzt, wodurch viel Sauerstoff für eine möglichst vollständige Verbrennung zur Verfügung gestellt wird.

Die WO 2008/065554 A1 beschriebt einen Mehrstoffbrenner gemäß dem Oberbegriff des ersten Anspruchs, der neben der Zuführung für einen ersten Brennstoff und für ein primäres Oxidationsmittel einen Ölbrenner und eine Zuführung für einen festen Ersatzbrennstoff umfasst. Um die Verbrennung des Ersatzbrennstoffes zu verbessern, werden die Partikel des Ersatzbrennstoffs beim Austritt aus dem Brenner nach oben abgelenkt, wodurch sich eine weite Flugbahn innerhalb der durch die Verbrennung des ersten Brennstoffs mit dem primären Oxidationsmittel erzeugten Flamme ergibt. Auch offenbart die WO 2008/065554 A1 ein Verfahren zum Beheizen eines Ofenraums gemäß dem Oberbegriff des fünften Anspruchs. Der Erfindung liegt nun die Aufgabe zugrunde, einen Mehrstoffbrenner zu schaffen, bzw. ein Verfahren zum Beheizen eines Ofenraums dahingehend zu verbessern, dass auch bei einem erhöhten Anteil an Sekundärbrennstoffen eine möglichst vollständige Umsetzung dieser Brennstoffe erfolgt, noch bevor sie mit dem Aufgabegut in Kontakt kommen können.

Gelöst ist diese Aufgabe durch einen Mehrstoffbrenner mit den Merkmalen des Patentanspruchs 1 bzw. durch ein Verfahren zum Beheizen eines Ofenraums mit den Merkmalen des Anspruchs 4. Vorteilhafte Ausgestaltungen der Erfindung sind in den Unteransprüchen angegeben.

Ein erfindungsgemäßer Mehrstoffbrenner besitzt also, neben den Zuführungen für den primären Brennstoff und für das primäre Oxidationsmittel, die beispielsweise als koaxial zueinander angeordnete Ringdüsen oder ringförmig angeordnete Einzeldüsen ausgebildet sind, wenigstens eine Zuführung für einen zweiten Brennstoff und eine Zuführung für ein zweites Oxidationsmittel, die zugleich Mittel zum Zerstäuben des zweiten Brennstoffs umfasst. Die Zuführung für das zweite Oxidationsmittel und/oder die Zuführung für den zweiten Brennstoff sind dabei entweder innerhalb des Brennerkopfes des Mehrstoffbrenners angeordnet oder bilden eine vom eigentlichen Brennerkopf räumlich getrennte Lanzenanordnung. Beim zweiten Brennstoff handelt es sich um den gleichen Brennstoff wie der primäre Brennstoff oder einen anderen festen, flüssigen oder gasförmigen Brennstoff; beim zweiten Oxidationsmittel handelt es sich bevorzugt um ein sauerstoffreiches Gas mit einer Sauerstoffkonzentration von über 22 Vol.-%. Des Weiteren besitzt der Brenner wenigstens eine Zuführung für einen weiteren sekundären Brennstoff, beispielsweise für einen festen (pulverförmigen oder stückigen) Ersatzbrennstoff. Die Zuführung für das zweite Oxidationsmittel umfasst ein Rohr oder eine Lanze, die innerhalb des Brennerkopfs angeordnet ist und die räumlich so nahe an der Ausmündung der Zuführung für den zweiten Brennstoff angeordnet ist, dass sich die austretenden Stoffströme des zweiten Oxidationsmittels und des zweiten Brennstoffs innig miteinander vermischen, um anschließend zu verbrennen. Die Zuführung für das zweite Oxidationsmittel und die Zuführung für den zweiten Brennstoff bilden also zusammen eine Zweistoffdüse zum Zerstäuben des zweiten Brennstoffs in einer Atmosphäre, die überwiegend aus dem zweiten Oxidationsmittel gebildet ist. Die nach und während der Zerstäubung erfolgende Verbrennung des zweiten Brennstoffs mit dem zweiten Oxidationsmittel führt zu einer Flamme ("zweite Flamme") innerhalb der durch die Verbrennung des primären Brennstoffs und des primären Oxidationsmittels gebildeten Flamme ("erste Flamme"). Die zweite Flamme wird von zumindest einem Teil der übrigen eingetragenen sekundären Brennstoffe, beispielsweise von den Partikeln des festen Ersatzbrennstoffs, durchlaufen und sorgt davor, dass diese zusätzlich aufgeheizt und frühzeitig umgesetzt werden. Die Wahrscheinlichkeit, dass unvollständig verbrannte Partikel des festen Ersatzbrennstoffs mit dem Aufgabegut im Ofenraum in Kontakt kommen, wird erheblich reduziert. Zugleich kann der Anteil an Ersatzbrennstoffen im Energiemix des Mehrstoffbrenners deutlich erhöht und der Anteil an hochwertigen Primärbrennstoffen entsprechend reduziert werde, wodurch eine erhebliche Kosteneinsparung gegenüber dem Betrieb mit Mehrstoffbrennern nach dem Stande der Technik erzielt werden kann.

Um eine möglichst innige Durchmischung von zweitem Brennstoff und zweitem Oxidationsmittel zu gewährleisten, ist es vorteilhaft, die Zuführung für das zweite Oxidationsmittel innerhalb der Zuführung für den zweiten Brennstoff oder die Zuführung für den zweiten Brennstoff innerhalb der Zuführung für das Oxidationsmittel anzuordnen. Insbesondere sind die beiden Zuführungen koaxial zueinander angeordnet, jedoch sind im Rahmen der Erfindung exzentrische Anordnungen keineswegs ausgeschlossen. Alternativ dazu können beide Zuführungen auch als parallel zueinander angeordnete Rohre ausgebildet sein, die so nahe beieinander angeordnet sind, dass sich die Stoffströme des zweiten Oxidationsmittels und des zweiten Brennstoffs gegenseitig beeinflussen; beispielsweise beträgt die Entfernung der Mittelachsen beider Zuführungen nur maximal das Eineinhalbfache der Summe der Innenradien der beiden Zuführungen. Die beiden Zuführungen bilden also eine außenmischende Zerstäuberdüse, deren Zweck darin besteht, den zweiten Brennstoff möglichst fein im zweiten Oxidationsmittel zu verteilen und eine besonders innige Durchmischung der beiden Stoffströme zu erreichen. Zur weiteren Stabilisierung des jeweiligen Stoffstroms können die Zuführungen im Übrigen auch mit Verdrallungseinrichtungen ausgerüstet sein.

Gemäß der Erfindung sind die Zuführung für das zweite Oxidationsmittel und die Zuführung für den zweiten Brennstoff derart im Brenner ausgerichtet, dass die während des bestimmungsgemäßen Betriebs des Brenners aus ihnen austretenden Stoffströme in Richtung einer sich bei der Verbrennung des primären Brennstoffs mit dem primären Oxidationsmittel im Ofenraum vor der Brennerstirn sich ausbildenden ersten Flamme, und einer vorgegebenen Zone innerhalb dieser Flamme, ausgestoßen werden. Auf diese Weise wird die durch die Verbrennung des zweiten Brennstoffs mit dem zweiten Oxidationsmittel entstehende zweite Flamme in Richtung auf die erste Flamme, und auf eine innerhalb dieser ersten Flamme vorliegenden Zone relativ niedriger Temperatur, ausgerichtet.

Eine vorteilhafte Weiterbildung der Erfindung sieht vor, dass die Zuführung für den zweiten Brennstoff und die Zuführung für das zweite Oxidationsmittel geodätisch gesehen unterhalb der Mittelhorizontalen der Brennerstirn angeordnet ist. Insbesondere können die Zuführungen für den zweiten Brennstoff und die Zuführung für das zweite Oxidationsmittel auch als Lanzenanordnung ausgebildet sein, die auf den Bereich ausgerichtet ist, in dem sich im Ofenraum während des Betriebs des Mehrstoffbrenners die erste Flamme ausbildet.

In einem besonders bevorzugten Einsatz des erfindungsgemäßen Brenners ist dieser in der Ofenwand eines Drehrohrofens montiert, beispielsweise eines Drehrohrofens, der der Kalk- oder Zementherstellung oder der thermischen Abfallverwertung dient.

Die Aufgabe der Erfindung wird auch durch ein Verfahren zum Beheizen eines Ofenraums gelöst, bei dem ein primäres Oxidationsmittel und ein primärer Brennstoff sowie wenigstens ein zweiter Brennstoff über separate Strömungswege in einem Ofenraum eingetragen und dort in einer primären Flamme verbrannt werden, wobei erfindungsgemäß wenigstens ein zweiter Brennstoff vor oder während seines Eintrags in den Ofenraum mit einem zweitem Oxidationsmittel vermischt und das Gemisch aus zweitem Brennstoff und zweitem Oxidationsmittel in einem in die primäre Flamme gerichteten Strom eingetragen wird. Das Oxidationsmittel wird mit einer hohenGeschwindigkeit in den Ofenraum eingetragen, die im Unterschall-, Schall oder Überschallbereich liegen kann, vermischt sich innig mit diesem und reagiert mit dem Brennstoff unter Ausbildung der zweiten Flamme.

Dabei wird der zweite Brennstoff durch den Kontakt mit dem zweiten Oxidationsmittel zerstäubt, wodurch sich ein feinteiliges Gemisch aus zweitem Brennstoff und zweitem Oxidationsmittel ausbildet, das anschließend in einer zweiten Flamme innerhalb der ersten Flamme verbrennt. Eine Zerstäubung des zweiten Brennstoffs wird insbesondere durch die oben erwähnte hohe Geschwindigkeit des Oxidationsmittels bewirkt.

Grundsätzlich kann im Rahmen der Erfindung als zweiter Brennstoff jeder gasförmige, flüssige oder feste Brennstoff zu Einsatz kommen. Besonders bevorzugt ist jedoch ein flüssiger Brennstoff, wie beispielsweise Öl oder ein flüssiger Ersatzbrennstoff, da ein solcher leicht mittels des zweiten Oxidationsmittels zerstäubt werden kann.

Als primäres Oxidationsmittel und/oder als zweites Oxidationsmittel kommt bevorzugt ein sauerstoffreiches Gas mit einem Sauerstoffgehalt von mehr als 22 Vol.-% zum Einsatz, bevorzugt mit einem Sauerstoffgehalt von mehr als 95 Vol.-%, besonders bevorzugt mit einem Sauerstoffgehalt von mehr als 99 Vol.-%. Das primäre Oxidationsmittel und das zweite Oxidationsmittel können aus der gleichen Oxidationsmittelquelle oder aber aus unterschiedlichen Oxidationsmittelquellen, wie beispielsweise Tanks oder Rohrleitungen, gespeist werden.

Anhand der Zeichnungen wird das erfindungsgemäße Verfahren näher erläutert.

In schematischen Ansichten zeigen:
- Fig. 1:: Einen erfindungsgemäßen Brenner in einer Frontansicht,
- Fig. 2:: Einen Drehrohrofen mit einem erfindungsgemäßen Brenner im Längsschnitt.

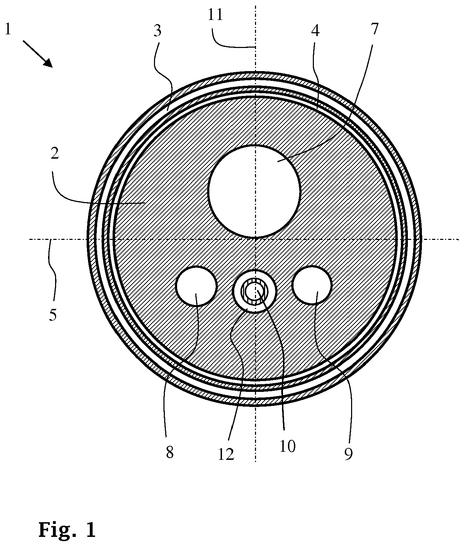

Das Ausführungsbeispiel nach Fig. 1 zeigt einen Mehrstoffbrenner 1, in dessen Brennerstirn 2 radial außenseitig ein Ringkanal 3 für die Zuführung von primärem Oxidationsmittel in den Ofenraum ausmündet. Beim primären Oxidationsmittel handelt es sich in der Regel um Luft oder um ein mit Sauerstoff angereichertes Gas mit einem Sauerstoffanteil von 22 Vol-% und darüber. Radial innenseitig zum Ringkanal 3 ist ein Ringkanal 4 angeordnet, der der Zuführung eines primären Brennstoffs dient. Beim primären Brennstoff handelt es sich in der Regel um einen hochkalorischen Brennstoff wie Erdgas, Öl oder um einen pulversierten Festbrennstoff aus Kohle oder Petrolkoks, jedoch können auch andere Brennstoffe als primäre Brennstoffe eingesetzt werden, beispielsweise Mischungen aus einem hochkalorischen und einem niederkalorischen Brennstoff. Exzentrisch zur Mittelachse und - geodätisch gesehen - oberhalb der horizontalen Mittelebene 5 des Mehrstoffbrenners 1 ist ein Rohr 7 für einen sekundären Brennstoff angeordnet, insbesondere für einen sekundären Festbrennstoff, wie beispielsweise Kunststoff-Schreddermaterial, Reifenschnitzel, Altholz oder sonstige partikelförmige Abfallstoffe oder andere, in der Regel niederkalorische, Festbrennstoffe. Des weiteren umfasst der Mehrstoffbrenner 1 Rohre 8, 9, die unterhalb der horizontalen Mittelebene 5 des Mehrstoffbrenners 1 angeordnet sind und der Zuführung weiterer gasförmiger, flüssiger oder fester sekundäre Brennstoffe dienen, wie beispielsweise Tiermehl, Lösungsmittel, Altöl, etc. Im Übrigen sind die Ringkanäle 3, 4 und die Rohre 7, 8 und 9 innerhalb des Brennerkopfes zueinander parallel angeordnet.

Der Mehrstoffbrenner 1 weist darüber hinaus ein weiteres Rohr 10 auf, das der Zuführung eines flüssigen sekundären Brennstoffs dient und koaxial im Innern einer Sauerstofflanze 12 angeordnet ist. Rohr 10 und Sauerstofflanze 12 sind ebenfalls im Wesentlichen parallel zu den Rohren 7, 8, 9 durch den Brennerkopf geführt und sind in der vertikalen Mittelebene 11 sowie unterhalb der horizontalen Mittelebene 5 des Mehrstoffbrenners 1 angeordnet. Rohr 10 und Sauerstofflanze 12 bilden gemeinsam eine Zerstäuberdüse, die in der unten näher beschriebenen Weise dazu dient, den der aus dem Rohr 10 ausströmende flüssige Brennstoff zu zerstäuben und zu verbrennen.

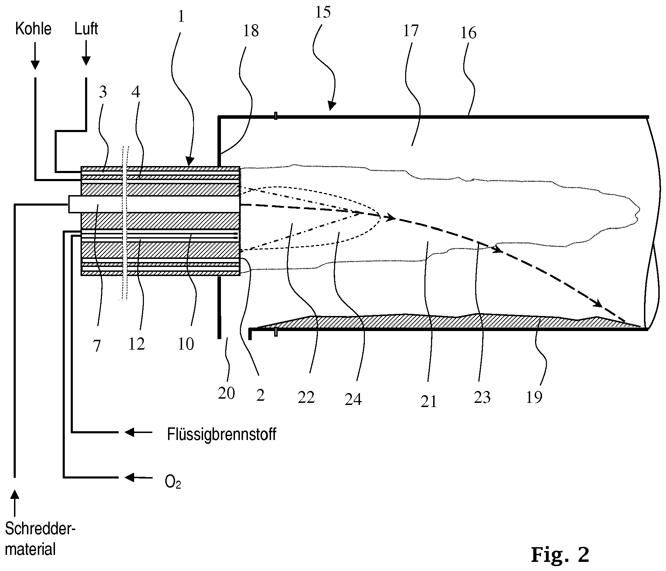

In Fig. 2 ist der Mehrstoffbrenner 1 in seinem Einbauzustand in einem Drehrohrofen 15, beispielsweise einem Drehrohrofen zum Herstellen von Zement, gezeigt. Der nur ausschnittsweise dargestellte Drehrohrofen 15 umfasst einen mit einer drehbar gelagerten Trommel 16 ausgerüsteten Ofenraum 17, an dessen Stirnseite 18 der Brennerkopf des Mehrstoffbrenners 1 eingebaut ist.

Beim Betrieb des Drehrohrofens 15 wird die Trommel 16 mit Aufgabegut 19 beschickt. Im Anschluss an die thermische Behandlung im Drehrohrofen 15 wird das Aufgabegut 19 über eine Ausgabeöffnung 20 abgeführt. Über den Ringkanal 3 des Mehrstoffbrenners 1 wird das primäre Oxidationsmittel und über den Ringkanal 4 der primäre Brennstoff in den Ofenraum 17 eingebracht. Über hier nicht gezeigte Zuführungen außerhalb des Mehrstoffbrenners wird ein weiteres Oxidationsmittel, die meist als "Sekundärluft" bezeichnet wird und bei der Klinkererzeugung den größten Teil des insgesamt eingesetzten Oxidationsmittels ausmacht, in den Ofenraum 17 eingetragen. Gleichzeitig mit dem Eindüsen des primären Oxidationsmittels und des primären Brennstoffs wird über Rohr 7 ein sekundärer Festbrennstoff, beispielsweise Kunststoff- Schreddermaterial, in den Ofen eingetragen; gegebenenfalls werden über die Rohre 8, 9 weitere sekundäre Brennstoffe eingetragen. Im Ofenraum 17 verbrennen die primären und sekundären Brennstoffe in einer primären Flamme 21. Aufgrund der Teilchengröße und der vorhandenen Feuchtigkeit der durch das Rohr 7 eingebrachten partikelförmigen Ersatzbrennstoffe besitzt die Flamme 21 in einem Bereich unmittelbar vor dem Zentrum der Brennerstirn 2 eine vergleichsweise kalte Zone 22, innerhalb der aus dem Rohr 7 ausgestoßene Partikel lediglich getrocknet und pyrolysiert, jedoch nicht oder nur an der Oberfläche verbrannt werden. Wie anhand einer typischen Flugbahn 23 eines aus dem Rohr 7 ausgestoßenen Partikels zu erkennen, führt der Weg dieser Partikel zu einem nicht unwesentlichen Teil durch die kalte Zone 22 hindurch. Die eigentliche Verbrennung der Partikel beginnt erst nach Durchlaufen des Bereichs 22; aufgrund der Größe der Partikel und der Kürze des Weges, den die Partikel anschließend durch die Flamme nehmen, besteht jedoch die Gefahr, dass zumindest ein Teil der Partikel unvollständig verbrannt in Kontakt mit dem Aufgabegut 19 gelangen. Dort üben sie eine reduzierende Wirkung auf das umgebende Aufgabegut aus, mit der Konsequenz, dass die Konzentration an Eisenoxid (FeO) im Aufgabegut steigt und damit die Qualität des Klinkers sinkt.

Um die Verbrennungsverhältnisse im Ofenraum zu verbessern, wird ein flüssiger Brennstoff über Rohr 10 und zugleich über die Sauerstofflanze 12 ein sauerstoffreiches Gas in den Ofenraum eingetragen. Beim flüssigen Brennstoff kann es sich um einen hoch- oder niederkalorischen Brennstoff handeln, beispielsweise handelt es sich um einen flüssigen Abfallstoff, wie etwa Lösungsmittel oder Altöl. Beim sauerstoffeichen Gas handelt es sich insbesondere um reinen Sauerstoff mit einer Konzentration von mindestens 95 Vol.-%. Das mit einer hohen Ausströmgeschwindigkeit von beispielsweise zwischen 50 m/s und 350 m/s eingedüste sauerstoffreiche Gas zerstäubt den radial innenseitig aus Rohr 10 austretenden Flüssigbrennstoff zu einem feinteiligen Aerosol, vermischt sich mit diesem und verbrennt in einer Flamme 24 hoher Temperatur, die sich innerhalb der primären Flamme 21, ungefähr im Bereich der kalten Zone 22, ausbildet. Die Flamme 24 wird auch von den aus Rohr 7 ausgestoßenen Partikeln auf ihrer Flugbahn 23 durchlaufen, die dabei stark erhitzt werden und fast augenblicklich beginnen zu verbrennen. Dadurch wird die Wahrscheinlichkeit, dass Teile der Partikel mit dem Aufgabegut in Kontakt kommen und eine Steigerung des FeO - Gehalts im Aufgabegut bewirken, wesentlich reduziert. Zugleich kann der Anteil an Ersatzbrennstoffen im Gesamtprozess erheblich gesteigert und der Anteil an Primärbrennstoff entsprechend gesenkt werden, womit eine deutliche Ersparnis an Energiekosten erzielt werden kann.

Die Sauerstofflanze12 und/oder das Rohr 10 kann/können im Übrigen mit Mitteln zum Unterstützen der Zerstäubung und Vermischung ausgerüstet sein, beispielsweise mit Drallerzeugern oder ähnlichem.

### Bezugszeichenliste

- 1.: Mehrstoffbrenner
- 2.: Brennerstirn
- 3.: Ringkanal
- 4.: Ringkanal
- 5.: horizontale Mittelebene
- 6.: -
- 7.: Rohr
- 8.: Rohr
- 9.: Rohr
- 10.: Rohr
- 11.: vertikale Mittelebene
- 12.: Sauerstofflanze
- 13.: -
- 14.: -
- 15.: Drehrohrofen
- 16.: Trommel
- 17.: Ofenraum
- 18.: Stirnseite
- 19.: Aufgabegut
- 20.: Aufgabeöffnung
- 21.: Flamme
- 22.: Kalte Zone
- 23.: Flugbahn
- 24.: Flamme

## Patentansprüche

1. Mehrstoffbrenner zum Beheizen eines Ofenraums, bei dem eine Zuführung (4) für einen primären Brennstoff und eine Zuführung für ein primäres Oxidationsmittel (3), eine Zuführung (7) für einen festen Ersatzbrennstoff, sowie wenigstens eine Zuführung (8, 9, 10) für einen flüssigen zweiten Brennstoff an einer Brennerstirn (2) in den Ofenraum (17) ausmündet,
**dadurch gekennzeichnet,**
**dass** im Bereich der Zuführung (10) für den zweiten Brennstoff eine Zuführung (12) für ein zweites Oxidationsmittel vorgesehen ist, die Mittel zum Zerstäuben des zweiten Brennstoffs umfasst, wobei die Zuführung (12) für das zweite Oxidationsmittel und die Zuführung (10) für den zweiten Brennstoff derart ausgerichtet sind, dass die von den Zuführungen (10, 12) während des Betriebs des Brenners (1) austretenden Stoffströme auf eine Zone relativ niedriger Temperatur der sich bei der Verbrennung des primären Brennstoffs mit dem primären Oxidationsmittel im Ofenraum (17) vor der Brennerstirn (2) ausbildenden Flamme (21) gerichtet sind.

2. Mehrstoffbrenner nach Anspruch 1, **dadurch gekennzeichnet, dass** die Zuführung (10) für den zweiten Brennstoff radial innenseitig in der Zuführung (12) für das zweite Oxidationsmittel oder die Zuführung (12) für das zweite Oxidationsmittel radial innenseitig in der Zuführung (10) für den zweiten Brennstoff angeordnet ist.

3. Mehrstoffbrenner nach einem der vorhergehenden Ansprüche, **dadurch gekennzeichnet, dass** die Zuführung (10) für den zweiten Brennstoff und die Zuführung (12) für das zweite Oxidationsmittel geodätisch gesehen unterhalb der Mittelhorizontalen der Brennerstirn angeordnet sind.

4. Verfahren zum Beheizen eines Ofenraums, bei dem ein primäres Oxidationsmittel und ein primärer Brennstoff sowie wenigstens ein fester Ersatzbrennstoff und ein flüssiger zweiter Brennstoff über separate Strömungswege (3, 4, 7, 8, 9, 10) aus einem Mehrstoffbrenner (1) in einen Ofenraum (17) eingetragen und dort in einer primären Flamme (21) verbrannt werden,
**dadurch gekennzeichnet,**
**dass** der zweiter Brennstoff vor oder während seines Eintrags in den Ofenraum (17) mit einem zweiten Oxidationsmittel vermischt und das Gemisch aus zweitem Brennstoff und zweitem Oxidationsmittel als ein in die primäre Flamme (21) gerichteter Strom eingetragen wird, wobei der zweite Brennstoff durch den Kontakt mit dem zweiten Oxidationsmittel zerstäubt wird und anschließend in einer zweiten Flamme (24) verbrennt, wobei die durch die Verbrennung des zweiten Brennstoffs mit dem zweiten Oxidationsmittel entstehende zweite Flamme (24) auf eine innerhalb der primären Flamme (21) vorliegende Zone relativ niedriger Temperatur ausgerichtet ist.

5. Verfahren nach Anspruch 5, **dadurch gekennzeichnet, dass** als primäres Oxidationsmittel und/oder als zweites Oxidationsmittel ein sauerstoffreiches Gas mit einem Sauerstoffgehalt von mehr als 22 Vol.-%, bevorzugt mit einem Sauerstoffgehalt von mehr als 95 Vol.-%, besonders bevorzugt mit einem Sauerstoffgehalt von mehr als 99 Vol.-% zum Einsatz kommt.

## Claims

1. Multifuel burner for heating a furnace chamber where a feed (4) for a primary fuel and a feed for a primary oxidant (3), a feed (7) for a solid substitute fuel and at least one feed (8, 9, 10) for a liquid second fuel open at a burner face (2) into the furnace chamber (17),
**characterized in that**
in the region of the feed (10) for the second fuel there is provided a feed (12) for a second oxidant which comprises means for atomizing the second fuel, wherein the feed (12) for the second oxidant and the feed (10) for the second fuel are oriented such that the material streams exiting the feeds (10, 12) during operation of the burner (1) are directed at a relatively low temperature zone of the flame (21) formed in the furnace chamber (17) in front of the burner face (2) during combustion of the primary fuel with the primary oxidant.

2. Multifuel burner according to Claim 1, **characterized in that** the feed (10) for the second fuel is arranged radially inside the feed (12) for the second oxidant or the feed (12) for the second oxidant is arranged radially inside the feed (10) for the second fuel.

3. Multifuel burner according to either of the preceding claims, **characterized in that**, viewed geodesically, the feed (10) for the second fuel and the feed (12) for the second oxidant are arranged below the center horizontal of the burner face.

4. Method of heating a furnace chamber where a primary oxidant and a primary fuel and at least one solid substitute fuel and a liquid second fuel are introduced from a multifuel burner (1) into a furnace chamber (17) via separate flow paths (3, 4, 7, 8, 9, 10) and there combusted in a primary flame (21),
**characterized in that**
the second fuel before or during introduction into the furnace chamber (17) is mixed with a second oxidant and the mixture of second fuel and second oxidant is introduced as a stream directed into the primary flame (21), wherein the second fuel is atomized by the contact with the second oxidant and subsequently combusts in a second flame (24), wherein the second flame (24) formed by the combustion of the second fuel with the second oxidant is oriented at a relatively low temperature zone inside the primary flame (21).

5. Method according to Claim 5, **characterized in that** as the primary oxidant and/or as the second oxidant an oxygen-rich gas having an oxygen content of more than 22 vol%, preferably having an oxygen content of more than 95 vol%, particularly preferably having an oxygen content of more than 99 vol%, is employed.

## Revendications

1. Brûleur multi-combustible pour le chauffage d'un four, dans lequel une conduite d'alimentation (4) pour un combustible primaire et une conduite d'alimentation pour un oxydant primaire (3), une conduite d'alimentation (7) pour un combustible de substitution solide, ainsi qu'au moins une conduite d'alimentation (8, 9, 10) pour un deuxième combustible liquide débouchent au niveau d'un front du brûleur (2) dans le four (17), **caractérisé en ce que**
une conduite d'alimentation (12) pour un deuxième oxydant est prévue dans la zone de la conduite d'alimentation (10) pour le deuxième combustible, qui comprend des moyens pour la vaporisation du deuxième combustible, la conduite d'alimentation (12) pour le deuxième oxydant et la conduite d'alimentation (10) pour le deuxième combustible étant orientées de sorte que les courants de matière sortant des conduites d'alimentation (10, 12) pendant l'exploitation du brûleur (1) soient dirigés vers une zone de température relativement basse de la flamme (21) formée lors de la combustion du combustible primaire avec l'oxydant primaire dans le four (17) avant le front du brûleur (2).

2. Brûleur multi-combustible selon la revendication 1, **caractérisé en ce que** la conduite d'alimentation (10) pour le deuxième combustible est agencée radialement sur le côté intérieur dans la conduite d'alimentation (12) pour le deuxième oxydant ou la conduite d'alimentation (12) pour le deuxième oxydant est agencée radialement sur le côté intérieur dans la conduite (10) pour le deuxième combustible.

3. Brûleur multi-combustible selon l'une quelconque des revendications précédentes, **caractérisé en ce que** la conduite d'alimentation (10) pour le deuxième combustible et la conduite d'alimentation (12) pour le deuxième oxydant sont agencées géodésiquement sous l'horizontale centrale du front du brûleur.

4. Procédé de chauffage d'un four, selon lequel un oxydant primaire et un combustible primaire, ainsi qu'au moins un combustible de substitution solide et un deuxième combustible liquide sont introduits par des voies d'écoulement séparées (3, 4, 7, 8, 9, 10) depuis un brûleur multi-combustible (1) dans un four (17), et y sont brûlés dans une flamme primaire (21),
**caractérisé en ce que**
le deuxième combustible est mélangé avec un deuxième oxydant avant ou pendant son introduction dans le four (17), et le mélange du deuxième combustible et du deuxième oxydant est introduit sous la forme d'un courant orienté dans la flamme primaire (21), le deuxième combustible étant vaporisé par contact avec le deuxième oxydant, puis brûlé dans une deuxième flamme (24), la deuxième flamme (24) formée par la combustion du deuxième combustible avec le deuxième oxydant étant orientée vers une zone de température relativement basse présente dans la flamme primaire (21).

5. Procédé selon la revendication 5, **caractérisé en ce qu'**un gaz riche en oxygène ayant une teneur en oxygène de plus de 22 % en volume, de préférence ayant une teneur en oxygène de plus de 95 % en volume, de manière particulièrement préférée ayant une teneur en oxygène de plus de 99 % en volume, est utilisé en tant qu'oxydant primaire et/ou en tant que deuxième oxydant.
